# EUROPEAN PATENT APPLICATION

(11) **EP 2 206 435 A2**
(43) Date of publication of application: **14.07.2010**
(21) Application number: 09015402.2
(22) Date of filing: 12.12.2009
(51) Int. Cl.: A22C 15/00

(54) **Press-formed shape, in particular a smoking rod, and method of manufacturing thereof**

(30) Priority: 07.01.2009 PL 38700609
(71) Applicant: PPHU BASTRA SP. J. JERZY WEINDICH I S-KA, 41-503 Chorzów (PL)
(72) Inventor: Weindich, Jerzy, 41-506 Chorzow (PL); Kozlowski, Rafal, 41-813 Zabrze (PL)
(74) Representative: Lukaszyk, Szymon

(57) **Abstract**

The invention relates to a metal press-formed shape (20), in particular a smoking rod, manufactured from a metal pipe (1) and having a tri-arm star shaped cross-section and a method of manufacturing thereof. The method comprises a step of uniform and concurrent pressing a pipe (1) in radial inward directions over its entire length along three forming planes passing through the central axis of the pipe and equiangularly distanced in relation to each other by an angle of 120°, using three longitudinal pressing stamps. To provide a smoking rod the ends of which would be entirely sealed and without sharp edges which might damage intestine or casing of a butcher's product hanged up on such a rod, the method additionally comprises a step of mounting at the ends of the pipe (1) metal convex sealing plugs (27) having a cylindrical portion (28) and an oval portion (29), that are advantageously welded circumferentially to the ends of the pipe (1) before said pressing step.

## Description

The present invention relates to a metal press-formed shape, in particular to a smoking rod, manufactured from a metal pipe and having a tri-arm star shaped cross-section, as well as to a method of manufacturing such a shape.

Polish patent application P. 381733 discloses a press-formed shape, in particular a smoking rod, manufactured from a metal pipe and having a tri-arm star shaped cross-section which is constant over the entire length thereof, wherein the arms are equiangularly distanced in relation to each other by an angle of 120°, and wherein side walls of every arm are parallel to each other along a section of the length amounting at least a half of the entire radial length of an arm. This patent application discloses also a method of manufacturing such a shape comprising steps of uniform and concurrent pressing a pipe radially inwardly over its entire length along three forming planes passing through the central axis of the pipe and equiangularly distanced in relation to each other by an angle of 120°, using three longitudinal pressing stamps.

An object of the invention is to provide a new type of a smoking rod, the ends of which would be entirely sealed and without sharp edges which may damage intestine or casing of a butcher's product hanged up on such a rod. The object of the invention is also to provide an economic and simple method of manufacturing such a shape.

In order to accomplish the aforementioned and other objects, according to the invention there is provided a method of manufacturing metal press-formed shapes, in particular smoking rods, of a tri-arm star shaped cross-section, from a metal pipe as described above, which before a pressing step additionally comprises a step of mounting at the ends of the pipe metal convex sealing plugs having a cylindrical portion and an oval portion.

It is therefore no longer required to use special protective caps that are generally installed at the ends of typical smoking rods during inserting a rod into a loop of butcher's products, and the interior of a rod is entirely and tightly sealed.

It is advantageous if said step of mounting said metal convex sealing plugs at the ends of said pipe comprises putting said plugs on or inserting said plugs under a wall of said pipe

In particular, said step of mounting said metal convex sealing plugs at the ends of said pipe advantageously comprises welding said plugs circumferentially to said pipe.

According to the invention there is also provided a metal press-formed shape, in particular a smoking rod, manufactured from a metal pipe and having a tri-arm star shaped cross-section which is constant over the entire length thereof, wherein the neighbouring arms are rotated in relation to each other by an angle of 120°, and wherein side walls of every arm are parallel to each other along a section of the length amounting at least a half of the entire length of an arm, which is **characterised in that** to the ends of the shape metal sealing plugs are mounted, wherein the plugs cross-section in a plane parallel to the longitudinal axis of said shape in the points of mounting substantially corresponds to the shape cross-section.

The exemplary embodiments of the invention are presented below in connection with the attached drawings on which:
Fig. 1 shows an axonometric view of a starting pipe element and plugs which are used for manufacturing a smoking rod, depicted in a state before the press-forming step,
Fig. 2 shows a smoking rod plug in a lateral cross-section and a front view,
Fig. 3 shows an axonometric view of a smoking rod manufactured according to a method of the invention, and
Fig. 4 shows a longitudinal-section of an alternative embodiment of a starting profile for a press-forming of a smoking rod according to the invention.

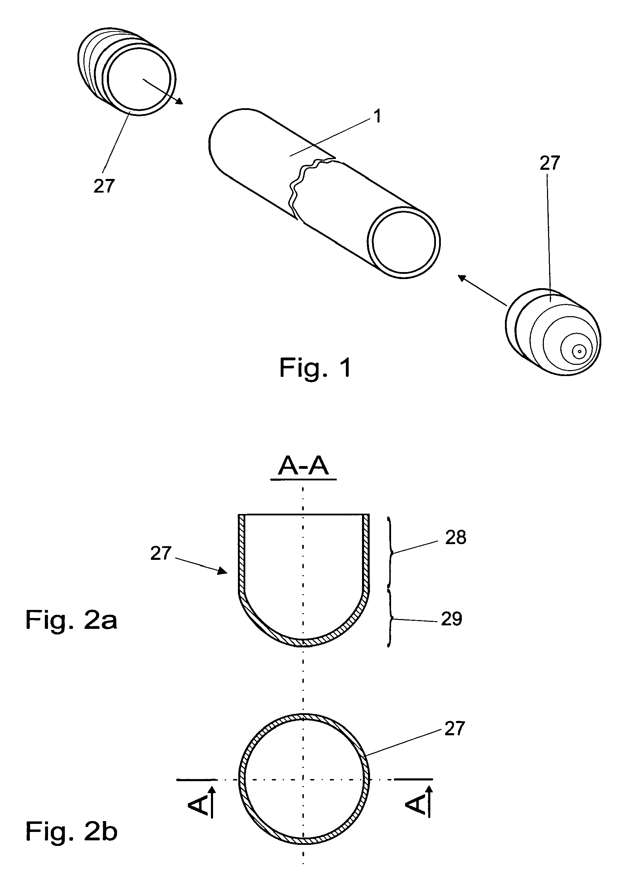

As shown in Fig. 1, starting elements for manufacturing an exemplary smoking rod according to the invention are a pipe 1 from a stainless steel having a length of 1 m, an outside diameter of 25 mm and a wall thickness of 1 mm, and two plugs 27 having a diameter and a wall thickness corresponding to the diameter and wall thickness of the pipe 1.

The plug shown in Fig. 2 is formed in a cold-pressing process from a stainless steel sheet having thickness of 1 mm. Fabricated plug 27 has a cylindrical portion 28 and an oval portion 29. The length of the cylindrical portion 28 is chosen in particular in dependence of the intended manner of mounting a plug 27 to a pipe 1.

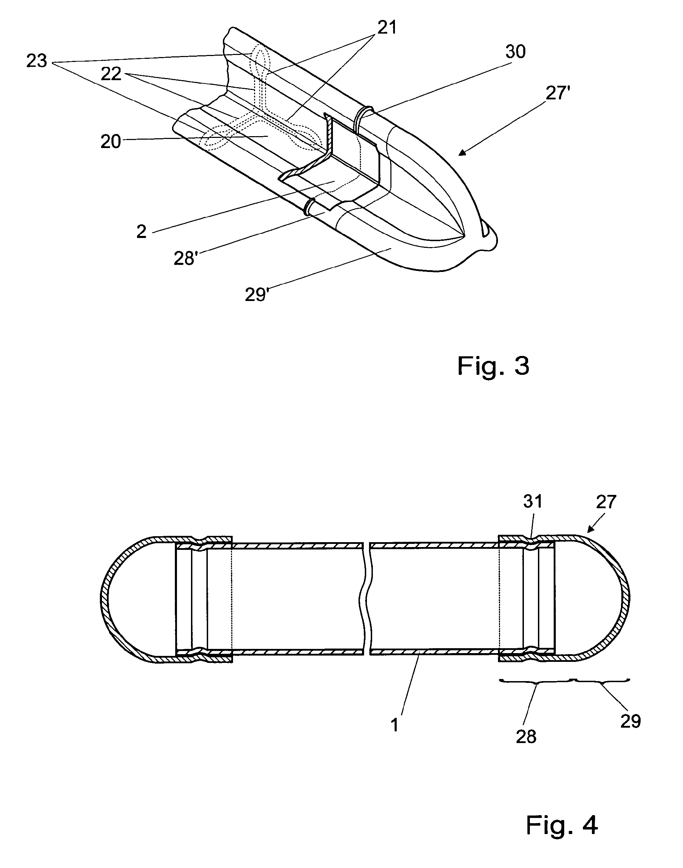

Fig. 3 shows an exemplary smoking rod 20 according to the invention. The initial step of a method of manufacturing the smoking rod 20 involves coaxially mounting of the plugs 27 to the ends of the pipe 1. For this purpose it is particularly advantageous to use an automatic apparatus for circumferential welding. Subsequently, the pipe 1 having the plugs 27 welded thereon is placed in a press-forming device which enables subjecting the pipe to a forming process of uniform and concurrent pressing using three longitudinal pressing stamps effecting pressing forces in radially inward directions over its entire length along three forming planes passing through the central axis of the pipe and distanced equiangularly in relation to each other by an angle of 120°. Such devices are known from the prior art and one of them is disclosed in the Polish patent application P. 381733, which is as a whole included into the present description by reference.

From the inside side, every arm 21 of a smoking rod 20 has a straight-line section 22 corresponding to the width of a forming wall of the used press-forming device. Along this straight-line section 22 side walls of every arm of a smoking rod are parallel to each other, wherein the external portion of every arm has a form of a rounded section 23. The cross-section of a smoking rod 20 manufactured according to the invention is schematically depicted by dashed lines. In a result of carrying out a press-forming process a cylindrical section 28' of a plug 27' is deformed to substantially tri-arm profile corresponding to the profile of the press-formed smoke rod 20, while an oval portion 29' forms rounded ending of the smoking rod. The plug 27' is fixed to the smoking rod 20 by means of a welded joint 30.

Fig. 4 depicts a cross-section of the starting pipe shape for the second embodiment of a smoking rod according to the invention in the state before press-forming step. Such a profile has been obtained by sliding over plugs 27 on the ends of the pipe 20 and subsequently forming a circumferential constriction 31 of the plugs 27 in the area of the overthrust.

## Claims

1. A method of manufacturing metal press-formed shapes, in particular smoking rods, of a tri-arm star shaped cross-section, from a metal pipe, the method comprising a step of uniform and concurrent pressing a pipe in radial inward directions over its entire length along three forming planes passing through the central axis of the pipe and equiangularly distanced in relation to each other by an angle of 120°, using three longitudinal pressing stamps, **characterised in that** before a pressing step the method additionally comprises a step of mounting at the ends of the pipe (1) metal convex sealing plugs (27) having a cylindrical portion (28) and an oval portion (29).

2. The method according to claim 1, **characterised in that** the step of mounting said metal convex sealing plugs (27) at the ends of said pipe comprises putting said plugs on or inserting said plugs under a wall of said pipe.

3. The method according to claim 1 or 2, **characterised in that** the step of mounting said metal convex sealing plugs (27) at the ends of said pipe comprises welding said plugs circumferentially to said pipe.

4. A metal press-formed shape, in particular a smoking rod, manufactured from a metal pipe and having a tri-arm star shaped cross-section which is constant over the entire length thereof, wherein the neighbouring arms are rotated in relation to each other by an angle of 120°, and wherein side walls of every arm are parallel to each other along a section of the length amounting at least a half of the entire length of an arm, **characterised in that** to the ends of said shape (20) metal sealing plugs (27') are mounted, wherein the plugs cross-section in a plane parallel to the longitudinal axis of said shape (20) in the points of mounting substantially corresponds to the shape cross-section (20).
